Europäisches Patentamt

European Patent Office

Office européen des brevets

(19)

(11) **EP 1 338 890 B1**

(12) **EUROPEAN PATENT SPECIFICATION**

(45) Date of publication and mention
of the grant of the patent:
**02.11.2005 Bulletin 2005/44**

(51) Int Cl.⁷: **B01L 3/00**, G01N 21/17,
G01N 21/47, G01N 21/41

(21) Application number: **01996734.8**

(22) Date of filing: **16.11.2001**

(86) International application number:
**PCT/JP2001/010067**

(87) International publication number:
**WO 2002/040981 (23.05.2002 Gazette 2002/21)**

(54) **CHIP MEMBER FOR MICRO CHEMICAL SYSTEM, AND MICRO CHEMICAL SYSTEM USING THE CHIP MEMBER**

CHIP-GLIED FÜR EIN MIKROCHEMISCHES SYSTEM UND MIKROCHEMISCHES SYSTEM MIT DEM CHIP-GLIED

PUCE POUR MICROSYSTEME CHIMIQUE, ET MICROSYSTEME CHIMIQUE INTEGRANT CETTE PUCE

(84) Designated Contracting States:
**AT BE CH CY DE DK ES FI FR GB GR IE IT LI LU MC NL PT SE TR**

(30) Priority: **17.11.2000 JP 2000350800**
**07.06.2001 JP 2001173003**

(43) Date of publication of application:
**27.08.2003 Bulletin 2003/35**

(73) Proprietors:
• **Nippon Sheet Glass Co., Ltd.**
**Tokyo 105-8552 (JP)**
• **KANAGAWA ACADEMY OF SCIENCE AND TECHNOLOGY**
**Kawasaki-shi, Kanagawa-ken 213-0012 (JP)**

(72) Inventors:
• **HATTORI, Akihiko,c/o NIPPON SHEET GLASS CO., LTD.**
**Osaka-shi, Osaka 541-8559 (JP)**
• **YAMAGUCHI, Jun,c/o NIPPON SHEET GLASS CO., LTD.**
**Osaka-shi, Osaka 541-8559 (JP)**
• **KITAMORI, Takehiko**
**Bunkyo-ku, Tokyo 113-0033 (JP)**
• **TOKESHI, Manabu**
**Kanagawa Acad.of Science and Tech.**
**Kawasaki-shi, Kanagawa 213-0012 (JP)**

(74) Representative: **Kohler Schmid Möbus Patentanwälte**
**Ruppmannstrasse 27**
**70565 Stuttgart (DE)**

(56) References cited:
**WO-A-00/40334**        **WO-A-99/58963**
**JP-A- 2000 002 677**

**EP 1 338 890 B1**

**Description**

Technical Field

The present invention relates to a chip element for microchemical systems, and a microchemical system using the chip element, and in particular to a chip element that allows high-precision ultramicroanalysis to be carried out in a very small space and allows measurement to be carried out conveniently in any chosen location, and is thus suitable for use in particular in a small desktop thermal lens microscope, an analytical thermal lens microscope or the like, and a microchemical system using the chip element.

Background Art

In consideration of the rapidity of chemical reactions, and the need to carry out reactions using very small amounts, on-site analysis and the like, integration technology for carrying out chemical reactions in very small spaces has been focused upon, and research into this technology has been carried out with vigor throughout the world.

Microchemical systems that use glass substrates or the like are an example of such integration technology. In such a microchemical system, a very narrow channel is formed in a small glass substrate or the like, and mixing, reaction, separation, extraction, detection or the like is carried out on a sample in the channel. Examples of reactions carried out in a microchemical system include diazotization reactions, nitration reactions, and antigen-antibody reactions. Examples of extraction/separation include solvent extraction, electrophoretic separation, and column separation. As an example in which 'separation' is the sole aim, an electrophoresis apparatus for analyzing extremely small amounts of proteins, nucleic acids or the like has been proposed. This electrophoresis apparatus uses a channel-possessing plate-shaped element comprised of two glass substrates joined together (see, for example, Japanese Laid-open Patent Publication (Kokai) No. 8-178897). Because the element is plate-shaped, breakage is less likely to occur than in the case of a glass capillary tube having a circular or rectangular cross section, and hence handling is easier.

In a microchemical system, because the amount of the sample is very small, a high-precision detection method is essential. The path to making a detection method of the required precision fit for practical use has been opened up through the establishment of a photothermal conversion spectroscopic analysis method. This method utilizes a thermal lens effect that is produced through a liquid-borne sample absorbing light in a very narrow channel.

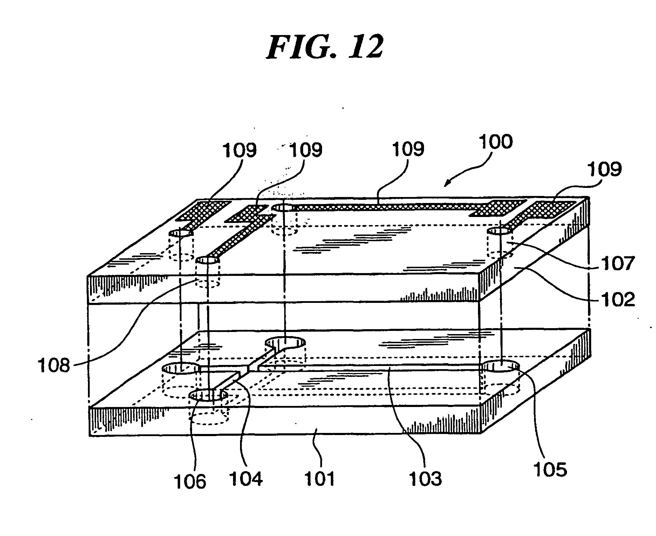

FIG. 12 is an exploded perspective view showing the constitution of a conventional channel-possessing plate-shaped element.

The conventional channel-possessing plate-shaped element 100 is composed of a glass substrate 101 and a glass substrate 102 integrally joined together. An analysis channel 103, and a sample (the object to be analyzed) feed-in channel 104, which intersects the analysis channel 103, are formed in the surface of the glass substrate 101 that is joined to the glass substrate 102. The analysis channel 103 has a buffer reservoir 105 at each end thereof, and the sample feed-in channel 104 has a buffer reservoir 106 at each end thereof. In the glass substrate 102, through holes 107 are formed in positions facing the buffer reservoirs 105 formed in the glass substrate 101, and through holes 108 are formed in positions facing the buffer reservoirs 106 formed in the glass substrate 101. Electrode films 109 are formed on the inner walls of the through holes 107 and 108 and on the outer surface of the glass substrate 102 in the vicinity of the through holes 107 and 108.

A chip element for spectroscopic analysis is composed from such a channel-possessing plate-shaped element 100. A solution sample is fed into the analysis channel 103 from the sample feed-in channel 104.

The solution sample is analyzed using a photothermal conversion spectroscopic analysis method. In this method, the solution sample is convergently irradiated with light, whereupon thermal energy is emitted due to absorption of the light by the solute in the solution sample. The temperature of the solvent is locally raised by this thermal energy, and hence the refractive index changes where the temperature is raised, resulting in a thermal lens being formed. This is known as the photothermal conversion effect.

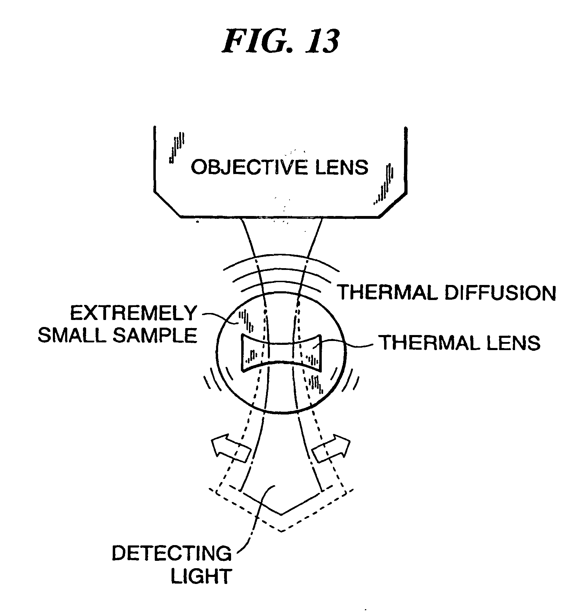

FIG. 13 is a view useful in explaining the principle of a thermal lens.

In FIG. 13, a convergent beam of exciting light is irradiated onto an extremely small solution sample via an objective lens of a microscope, whereupon the photothermal conversion effect described above takes place. For most substances, the refractive index drops as the temperature rises, and hence the refractive index of the solution sample becomes smaller the closer one gets to the center of the convergent beam of exciting light, which is where the temperature rise is highest. Due to thermal diffusion, the temperature rise becomes smaller, and hence the change in refractive index becomes smaller, with increasing distance from the center of the convergent beam of exciting light. Optically, this pattern of change in the refractive index brings about the same effect as with a concave lens, and hence the effect is known as the thermal lens effect. The size of the thermal lens effect, i.e. the power of the thermal lens, is proportional to the optical absorbance of the solution sample. Moreover, in the case that the refractive index increases with temperature, the same effect is produced, but because the change in the refractive index is opposite in sign, the thermal lens is convex.

In the photothermal conversion spectroscopic analysis method described above, thermal diffusion, i.e. change in refractive index, is observed, and hence the method is suitable for detecting concentrations in extremely small amounts of solution samples.

An example of a photothermal conversion spectroscopic analyzer that uses the photothermal conversion spectroscopic analysis method described above is disclosed in Japanese Laid-open Patent Publication (Kokai) No. 10-232210.

In a conventional photothermal conversion spectroscopic analyzer, a channel-possessing plate-shaped element is disposed below the objective lens of a microscope, and exciting light of a predetermined wavelength outputted from an exciting light source is introduced into the microscope. The exciting light is thus irradiated convergently via the objective lens onto a solution sample in the analysis channel of the channel-possessing plate-shaped element. The focal position of the convergently irradiated exciting light is in the solution sample, and hence the exciting light is absorbed at this focal position, and thus a thermal lens centered on the focal position is formed.

Moreover, detecting light having a wavelength different to the exciting light is outputted from a detecting light source and also introduced into the microscope. The detecting light emitted from the microscope is convergently irradiated onto the thermal lens that has been formed in the solution sample by the exciting light, and then passes through the solution sample, so that the detecting light is either diverged (in the case that the thermal lens is concave) or converged (in the case that the thermal lens is convex). The detecting light exiting the solution sample is used as signal light. The signal light passes through a converging lens and a filter or just a filter, and is then detected by a detector. The intensity of the detected signal light depends on the power of the thermal lens formed in the solution sample. Note that the detecting light may have the same wavelength as the exciting light, or the exciting light may also be used as the detecting light.

In the spectroscopic analyzer described above, a thermal lens is thus formed centered on the focal position of the exciting light, and the change in refractive index within the thermal lens is detected by means of detecting light having the same or a different wavelength to the exciting light.

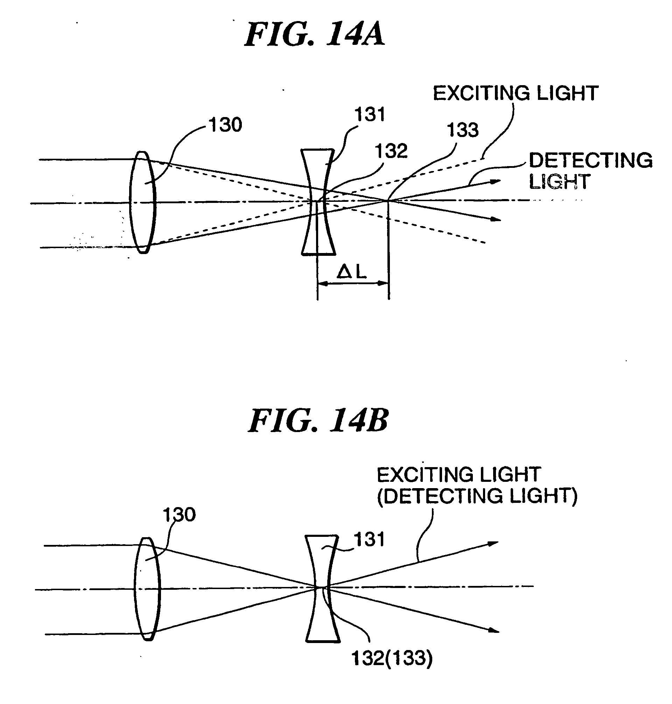

FIGS. 14A and 14B are views useful in explaining the formation position of the thermal lens and the focal position of the detecting light in the direction of the optical axis of the exciting light (hereinafter referred to as the Z-direction). FIG. 14A shows a case in which the objective lens has chromatic aberration, whereas FIG. 14B shows a case in which the objective lens does not have chromatic aberration. In FIGS. 14A and 14B, the exciting light and the detecting light have different wavelengths to one another.

In the microchemical system described above, in the case that the objective lens 130 has chromatic aberration, a thermal lens 131 is formed at the focal position 132 of the exciting light as shown in FIG. 14A. The focal position 133 of the detecting light is shifted by an amount $\Delta L$ from the focal position 132 of the exciting light due to the difference in wavelength between the detecting light and the exciting light, and hence the detecting light is deflected by the thermal lens 131 and thus changes in the refractive index within the thermal lens 131 can be detected as changes in the focal distance of the detecting light. In the case that the objective lens 130 does not have chromatic aberration, on the other hand, the focal position 133 of the detecting light is almost exactly the same as the focal position 132 of the exciting light as shown in FIG. 14B. The detecting light is thus not deflected by the thermal lens 131, and hence changes in the refractive index within the thermal lens 131 cannot be detected.

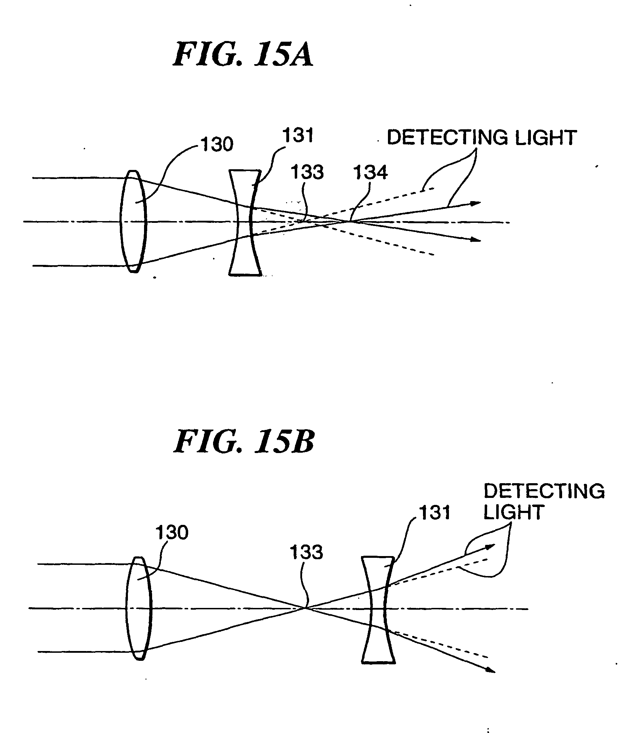

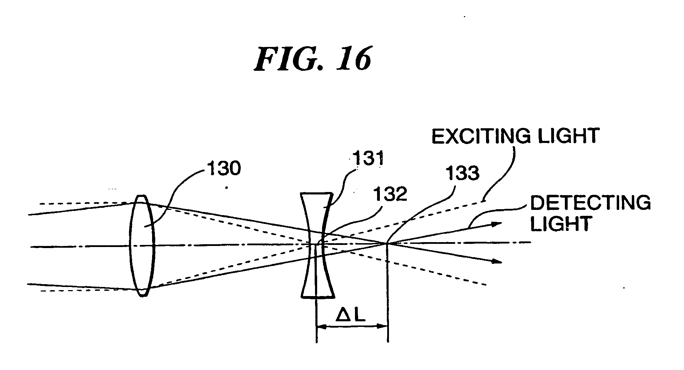

The objective lens 130 of a microscope is generally manufactured so as not to have chromatic aberration, and hence the focal position 133 of the detecting light is almost exactly the same as the position of the thermal lens 131 formed at the focal position 132 of the exciting light as described above (FIG. 14B). Changes in the refractive index within the thermal lens 131 thus cannot be detected. There is thus a problem that trouble must be taken to either shift the position of the solution sample in which the thermal lens is formed from the focal position 133 of the detecting light every time a measurement is taken as shown in FIGS. 15A and 15B, or else angle the detecting light slightly using a lens (not shown) before passing the detecting light through the objective lens 130 so that the focal position 133 of the detecting light will be shifted from the thermal lens 131 as shown in FIG. 16.

Moreover, the channel-possessing plate-shaped element is made small, but the optical system consisting of the light sources, the measurement section, the detection section (photoelectric conversion section) and the like makes the system as a whole complex in construction and large in size, resulting in a lack of portability. When carrying out chemical reactions or analysis using a thermal lens microscope system, there are thus limitations on where this can be done and the operations that can be carried out.

Moreover, the position at which the thermal lens is formed is the focal position of the exciting light, and hence in the case that the plate-shaped element possessing the channel through which the sample to be analyzed is passed and the objective lens are separated from one another, the operation of positioning the focal position of the objective lens at a predetermined place in the channel of the plate-shaped element must be carried out every time a measurement is taken. As a result, an XYZ 3-D stage for adjusting the position of the plate-shaped element and means for observing the focal position (a CCD or an eyepiece for visual observation, plus the associated optical system) are required, and hence the apparatus becomes large in size and thus suffers from a lack of portability.

Disclosure of Invention

It is an object of the present invention to provide a chip element that renders adjustments between the focal positions of exciting light and detecting light and the position of a solution sample every time a measurement is taken unnecessary and thus enables work efficiency to be increased, and moreover enables a microchemical system such as an analyzer to be made smaller in size, and also to provide a microchemical system using the chip element.

To attain the above object, the present invention provides a chip element for microchemical systems for use in a microchemical system that processes or carries out an operation on a sample in a liquid, the chip element comprising a channel-possessing plate-shaped element having a channel through which the liquid containing the sample is passed, and a lens fixed to the channel-possessing plate-shaped element in a position facing the channel.

Preferably, the lens is a gradient refractive index lens.

Preferably, the gradient refractive index lens is a planar lens.

Also Preferably, the gradient refractive index lens is disposed on one surface of said channel-possessing plate-shaped element, and a second gradient refractive index lens is fixed to the other surface of the channel-possessing plate-shaped element in a position opposite the first-mentioned gradient refractive index lens with respect to the channel.

Preferably, the second gradient refractive index lens is a planar lens.

Also preferably the first-mentioned gradient refractive index lens is built into the channel-possessing plate-shaped element.

More preferably, the second gradient refractive index lens is also built into the channel-possessing plate-shaped element.

To attain the above object, the present invention also provides a microchemical system comprising a chip element for microchemical systems as described above, an exciting light source that outputs exciting light of a predetermined wavelength, a detecting light source that outputs detecting light of a wavelength different to the wavelength of the exciting light, a light-inputting optical system that inputs the exciting light and the detecting light coaxially into the sample in the channel, a light-outputting optical system that leads output light out from the sample, and a detector that detects the output light coming from the light-outputting optical system.

Preferably, the exciting light source, the detecting light source, the light-inputting optical system and the light-outputting optical system are built into the chip element for microchemical systems.

Brief Description of Drawings

FIG. 1 is a schematic perspective view showing the constitution of a chip element for microchemical systems according to a first embodiment of the present invention;

FIG. 2 is an exploded perspective view of the channel-possessing plate-shaped element shown in FIG. 1;

FIG. 3 is a sectional view showing the disposal of a lens via a spacer;

FIG. 4 is a schematic perspective view showing the constitution of a chip element for microchemical systems according to a second embodiment of the present invention;

FIG. 5 is a sliced perspective view of the channel-possessing plate-shaped element shown in FIG. 4;

FIG. 6 is a schematic perspective view showing the constitution of a chip element for microchemical systems according to a third embodiment of the present invention;

FIG. 7 is a sectional view taken along line VI-VI in FIG. 6;

FIG. 8 is a graph useful in explaining the change in signal strength with the shift $\Delta L$ between the focal position of detecting light and the focal position of exciting light for a solid cylindrical lens 20;

FIG. 9 is a schematic block diagram showing the constitution of a microchemical system according to a first embodiment of the present invention;

FIG. 10 is a schematic block diagram showing the constitution of a microchemical system according to a second embodiment of the present invention;

FIG. 11 is a schematic block diagram showing the constitution of a microchemical system according to a third embodiment of the present invention;

FIG. 12 is an exploded perspective view showing the constitution of a conventional channel-possessing plate-shaped element;

FIG. 13 is a view useful in explaining the principle of a thermal lens;

FIGS. 14A and 14B are views useful in explaining the formation position of a thermal lens and the focal position of detecting light in the direction of the optical axis of exciting light (the Z-direction); specifically:

FIG. 14A shows a case in which the objective lens has chromatic aberration;

FIG. 14B shows a case in which the objective lens does not have chromatic aberration;

FIGS. 15A and 15B are views useful in explaining a method of detecting changes in refractive index within a thermal lens in a conventional photothermal conversion spectroscopic analyzer; specifically:

FIG. 15A shows a case in which the thermal lens is formed on the lens side relative to the focal position of the detecting light;

FIG. 15B shows a case in which the thermal lens is formed on the opposite side to the lens relative to the focal position of the detecting light; and

FIG. 16 is a view useful in explaining a method of detecting changes in refractive index within a thermal lens in a conventional photothermal conversion spectroscopic analyzer in the case that the detecting light is diverged using a diverging lens.

Best Mode of Carrying Out the Invention

Embodiments of the chip element for microchemical systems according to the present invention will now be described with reference to the drawings.

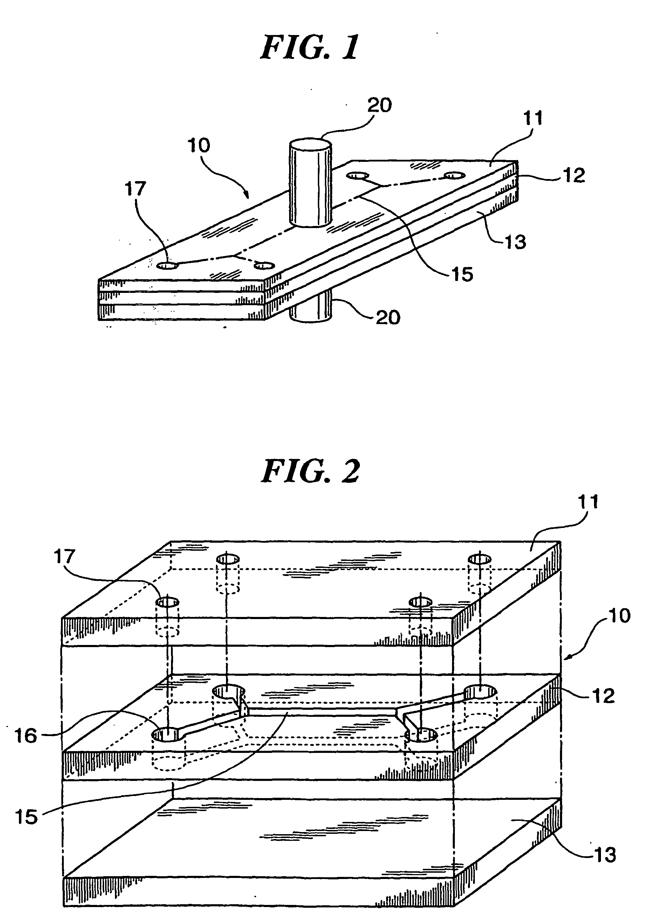

FIG. 1 is a schematic perspective view showing the constitution of a chip element for microchemical systems according to a first embodiment of the present invention.

In FIG. 1, the chip element for microchemical systems has a channel-possessing plate-shaped element 10. The channel-possessing plate-shaped element 10 is comprised of a glass substrate 11, a glass substrate 12 and a glass substrate 13, which are placed on top of one another and bonded together. As shown in FIG. 2, which is an exploded perspective view of the channel-possessing plate-shaped element 10, a channel 15 that branches into two at each end is formed in the glass substrate 12, and a buffer reservoir 16 is formed in the glass substrate 12 at the end of each of the four branches of the channel 15. The channel 15 is used for mixing, chemical synthesis, separation, detection or the like.

The glass substrate 11 is bonded onto one face of the glass substrate 12, and the glass substrate 13 onto the other face of the glass substrate 12, thus completing (i.e. enclosing) the channel 15. Moreover, a through hole 17 is formed in the glass substrate 11 in each of four positions corresponding to the positions of the buffer reservoirs 16.

Considering that the chip element for microchemical systems may be used with samples from living bodies such as cell samples, for example for DNA analysis, the material of the glass substrates 11 to 13 is preferably a glass that has excellent acid resistance and alkali resistance, for example a borosilicate glass, a soda lime glass, an aluminoborosilicate glass, a quartz glass or the like. However, if the usage of the chip element for microchemical systems is limited accordingly, then an organic substance such as a plastic can be used instead.

A gradient refractive index (GRIN) type solid cylindrical lens 20 for carrying out analysis as described above is fixed to each of two opposite faces of the channel-possessing plate-shaped element 10 in a position facing onto the channel 15. It should be noted, however, that it is sufficient to provide such a solid cylindrical lens 20 on only one face of the channel-possessing plate-shaped element 10 (the light-inputting side) (i.e. the solid cylindrical lens 20 on the light-outputting side is not essential).

The solid cylindrical lenses 20 may be bonded directly to the channel-possessing plate-shaped element 10 (i.e. the glass substrate 11 and the glass substrate 13) using an adhesive, or may be fixed using a jig. Examples of adhesives that may be used include organic adhesives such as acrylic adhesives and epoxy adhesives, and inorganic adhesives; the adhesive may be, for example, a UV-curing type, a thermosetting type, or a two-part type (in which curing takes place when two liquid parts are mixed together).

The glass substrates 11 to 13 may be bonded together using the adhesive used for bonding the solid cylindrical lenses 20 to the channel-possessing plate-shaped element 10 as described above. Alternatively, the glass substrates 11 to 13 may be fused together by heat fusion.

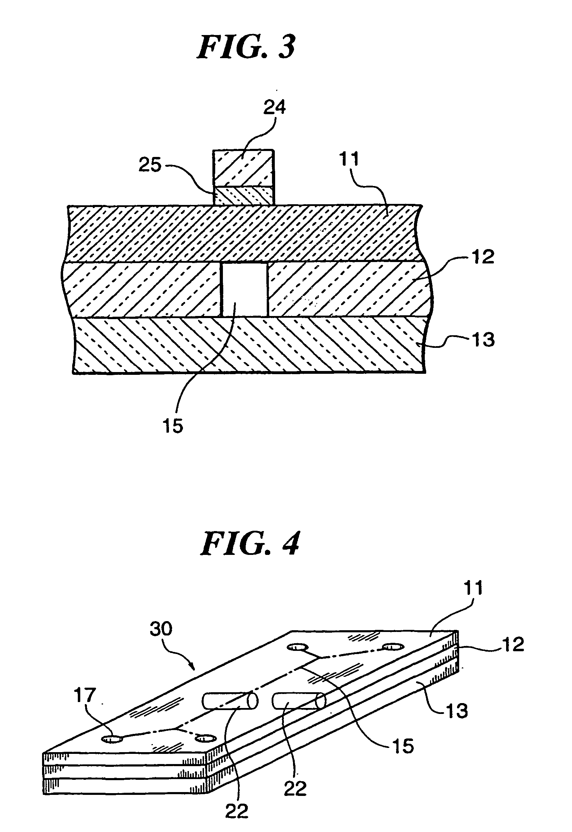

Moreover, it is also possible to dispose a spacer 25 for adjusting the focal position of the solid cylindrical lens 20 between the solid cylindrical lens 20 and the channel-possessing plate-shaped element 10, and fix the solid cylindrical lens 20 to the spacer 25, as shown in FIG. 3.

Each gradient refractive index type solid cylindrical lens 20 is a solid cylindrical transparent body made, for example, of glass or plastic, and is such that the refractive index changes continuously from the center thereof toward the periphery thereof (see, for example, Japanese Examined Patent Application Publication (Kokoku) No. 63-63502).

It is known that such a solid cylindrical transparent body is a converging light-transmitting body for which the refractive index $n(r)$ at a position a distance $r$ from the central axis in the radial direction is given approximately by the quadratic equation in $r$,

$$n(r) = n_0\{1 - (g^2/2)\cdot r^2\},$$

wherein $n_0$ represents the refractive index at the central axis, and g represents the square distribution constant.

If the length $z_0$ of the solid cylindrical lens 20 is chosen to be in a range of $0 < z_0 < \pi/2g$, then the image formation characteristics of the solid cylindrical lens 20 will be the same as those of a normal convex lens, even though both end faces of the solid cylindrical lens 20 are flat; when a parallel light beam is incident on one end face of the solid cylindrical lens 20, a focal point will be formed at a position a distance $s_0$ from the other end face of the solid cylindrical lens 20 (the end face from which the light beam exits), where

$$s_0 = \cot(gz_0)/n_0 g.$$

Such a solid cylindrical lens 20 may be manufactured, for example, by the following method.

A solid cylinder is formed from a glass having 57 to 63 mol% of $SiO_2$, 17 to 23 mol% of $B_2O_3$, 5 to 17 mol% of $Na_2O$ and 3 to 15 mol% of $Tl_2O$ as principal components. The solid glass cylinder is then treated in an ion exchange medium such as a potassium nitrate salt bath, thus carrying out ion exchange between thallium ions and sodium ions in the glass and potassium ions in the medium, and hence giving the solid glass cylinder a refractive index distribution in which the refractive index decreases continuously from the center of the cylinder toward the periphery thereof.

According to the first embodiment, a solid cylindrical lens 20 is fixed onto at least one face of the channel-possessing plate-shaped element 10, and hence when detecting a thermal lens formed in the position of the solution sample in the channel 15 using detecting light, the distance between the solid cylindrical lens 20 and the solution sample can be made constant such that the focal position of the solid cylindrical lens 20 is fixed at the position of the solution sample. As a result, the need to carry out adjustment between the focal position of the exciting light and the position of the solution sample each time a measurement is taken disappears, and moreover an apparatus for adjusting the focal position becomes unnecessary. By using this chip element for microchemical systems, a microchemical system can thus be made smaller in size.

The solid cylindrical lens 20 is designed such that the focal position of the detecting light is shifted slightly by an amount $\Delta L$ relative to the focal position of the exciting light (as in FIG. 14A).

The confocal length Ic (nm) is given by $Ic = \pi\cdot(d/2)^2/\lambda_1$, wherein d represents the diameter of the Airy disk and is given by $d = 1.22\times\lambda_1/NA$, $\lambda_1$ represents the wavelength (nm) of the exciting light, and NA represents the numerical aperture of the solid cylindrical lens 20.

The $\Delta L$ value described above varies according to the thickness of the sample to be analyzed. When carrying out measurements on a sample having a thickness lower than the confocal length, it is most preferable for $\Delta L$ to be equal to $\sqrt{3}\cdot Ic$.

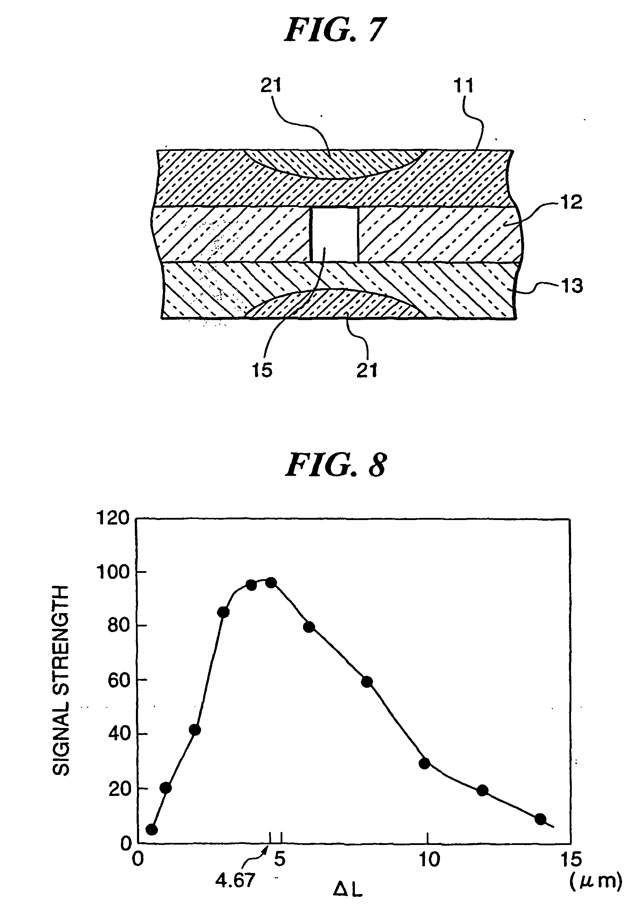

For example, if NA = 0.46, $\lambda_1 = 488nm$ and $\lambda_2 = 632.8nm$ ($\lambda_2$ presents the wavelength of the detecting light), then the relationship between the value of the shift $\Delta L$ and the signal strength is as shown in FIG. 8. FIG. 8 shows the signal strength relative to the value at $\Delta L = 4.67\mu m$, with the value at $\Delta L = 4.67\mu m$ being taken to be 100. It can be seen that the signal strength is a maximum at $\Delta L = 4.67\mu m$. In this case, it is thus preferable to design the solid cylindrical lens 20 such that the shift AL is the optimum value of $4.67\mu m$. $\Delta L$ represents the difference between the focal position of the detecting light and the focal position of the exciting light, and the same result is achieved regardless of whether the focal distance of the detecting light is longer or shorter than the focal distance of the exciting light.

Examples of the optimum shift $\Delta L$ (L1-L2) for the solid cylindrical lens 20 are given in Table 1 for various values of NA and $\lambda_1$. Here, L1 and L2 represent the focal distances of the exciting light (wavelength $\lambda_1$) and the detecting light (wavelength $\lambda_2$) respectively. Table 1

Table 1

| $\lambda 1$ (nm) | NA | d (nm) | Ic (nm) | $\Delta L$ ($\mu m$) | $\lambda 2$ (nm) |
|---|---|---|---|---|---|
| 488 | 0.46 | 1294.3 | 2696.0 | 4.670 | 633 |
| 488 | 0.40 | 1488.4 | 3565.4 | 6.175 | 633 |
| 532 | 0.46 | 1411.0 | 2939.0 | 5.091 | 633 |
| 532 | 0.40 | 1622.6 | 3886.9 | 6.732 | 633 |

Because both end faces of the solid cylindrical lens 20 are planar, it is easy to fix the solid cylindrical lens 20 to the spacer 25 and adjust the optical axis to be in the solution sample.

Moreover, because the solid cylindrical lens 20 is considerably smaller in size than a microscope objective lens, the microchemical system can be made more compact in size.

Furthermore, a gradient refractive index lens has a suitable amount of chromatic aberration, and hence the focal positions of the exciting light and the detecting light can be shifted from one another using only the solid cylindrical lens 20. As a result, it is not necessary to use a plurality of lenses, and hence the solid cylindrical lens 20 also contributes to making the microchemical system more compact in this respect.

Even if the solid cylindrical lens 20 does not itself give the optimum value of the shift $\Delta L$ between the focal position of the detecting light and the focal position of the exciting light, the solid cylindrical lens 20 can still be used if another mechanism for adjusting the focal position of the detecting light is provided.

For example, if the shift $\Delta L$ between the focal position of the detecting light and the focal position of the exciting light is less than the optimum value (i.e. the lens has little chromatic aberration), then the focal distance of the detecting light (wavelength $\lambda_2$) should be lengthened. This can be done by disposing a concave lens in the optical path of the detecting light to make the detecting light into a divergent beam before the detecting light is made coaxial with the exciting light. As a result, the focal distance of the detecting light for the solid cylindrical lens 20 is lengthened, and hence $\Delta L$ can be optimized.

The above description relating to $\Delta L$ also applies to the solid cylindrical lens 22 and the planar lens 21 used in the following embodiments.

FIG. 4 is a schematic perspective view showing the constitution of a chip element for microchemical systems according to a second embodiment of the present invention.

The chip element for microchemical systems according to the present embodiment has a channel-possessing plate-shaped element 30 having the same structure as the channel-possessing plate-shaped element 10 shown in FIG. 2, and has solid cylindrical lenses 22 the same as the solid cylindrical lenses 20 of the first embodiment.

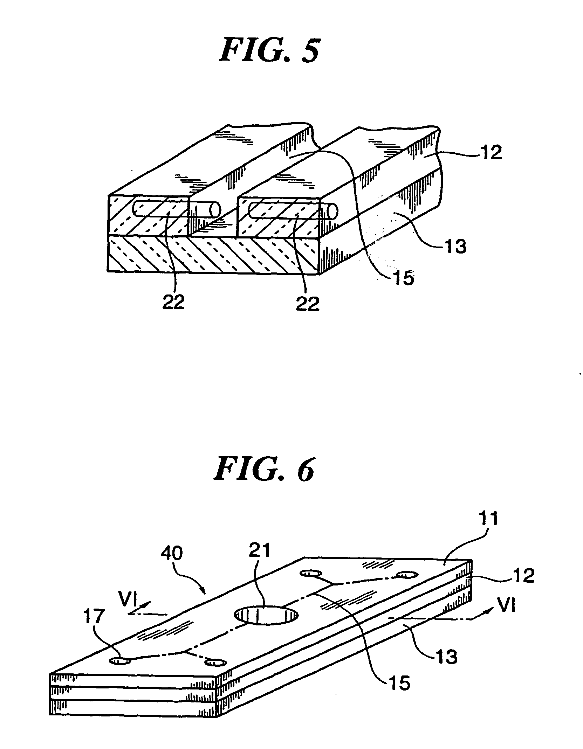

However, in FIG. 4 the solid cylindrical lenses 22 are built into the glass substrate 12, facing one another with the channel 15 in-between (see FIG. 5).

In FIGS. 4 and 5, a solid cylindrical lens 22 is shown on each side of the channel 15. However, although it is necessary for the solid cylindrical lens 22 to be present on the light-inputting side, the solid cylindrical lens 22 on the light-outputting side is not essential.

According to the present embodiment, the solid cylindrical lenses 22 are built into the channel-possessing plate-shaped element 30. As a result, the same effects can be realized as with the chip element for microchemical systems according to the first embodiment, but in addition, because the solid cylindrical lenses 22 do not project out, the microchemical system can be made yet smaller in size.

FIG. 6 is a schematic perspective view showing the constitution of a chip element for microchemical systems according to a third embodiment of the present invention.

The chip element for microchemical systems according to the present embodiment has a channel-possessing plate-shaped element 40 having the same structure as the channel-possessing plate-shaped element 10 shown in FIG. 2. However, in FIG. 6 the glass substrate 11 and the glass substrate 13 are each formed such that there is a gradient refractive index type planar lens 21 in the outer surface thereof facing the channel 15 (see FIG. 7).

As shown in FIG. 7, each planar lens 21 is a spherical segment in shape. The flat face of the planar lens 21 is at the same level as the surface of the glass substrate 11 or 13, and the refractive index increases toward the center of the lens. Such a refractive index gradient can be formed using an ion exchange method in which sodium ions in the glass substrates 11 and 13 are replaced with thallium ions or potassium ions. The ion exchange can be carried out by masking by covering the surface of the glass substrate with a metallic film except in the region where the planar lens is to be formed, and then immersing the glass substrate in a potassium nitrate or thallium nitrate molten salt.

It should be noted that it is sufficient to provide a planar lens 21 in only one face of the channel-possessing plate-shaped element 40 (the light-inputting side) (i.e. the planar lens 21 on the light-outputting side is not essential).

The refractive index distribution for the planar lens 21 is similar to that for the solid cylindrical lenses 20 and 22 described above. As in the first embodiment, the channel-possessing plate-shaped element 40 having the planar lenses 21 is used in a microchemical system to carry out desired detection or the like.

According to the present embodiment, the same effects can be realized as in the first embodiment, and moreover, because there are no parts that project out from the surfaces of the glass substrates 11 and 13, the microchemical system can be made yet smaller in size.

In a chip element for microchemical systems composed from a channel-possessing plate-shaped element 10, 30 or 40 as described above, the solution sample is fed into the channel 15 from a solution sample feed-in channel.

Detection or the like is carried out on the solution sample in a microchemical system using the photothermal conversion spectroscopic analysis method. Specifically, the microchemical system utilizes a photothermal conversion effect in which, when exciting light is convergently irradiated onto the solution sample, the solute in the solution sample absorbs the exciting light, and hence thermal energy is emitted. The temperature of the solvent thus rises locally and hence the refractive index changes locally, and as a result a thermal lens is formed.

Embodiments of the microchemical system according to the present invention will now be described with reference to the drawings.

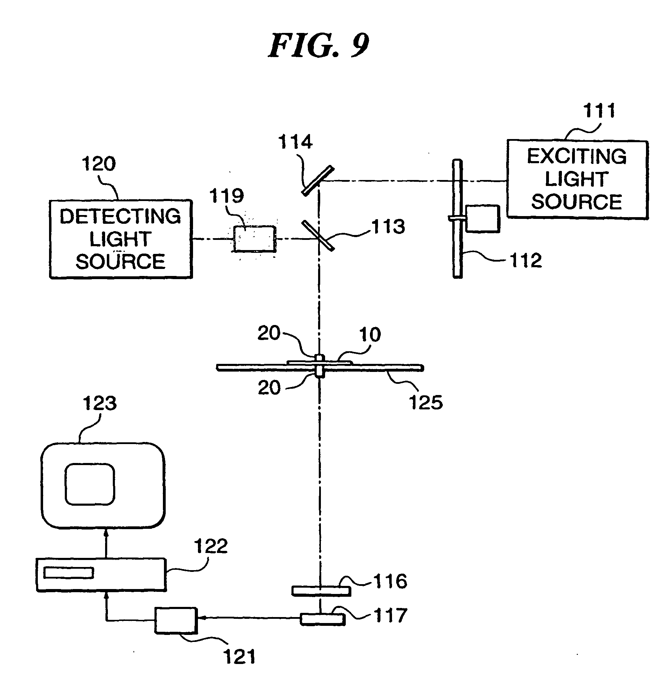

FIG. 9 is a schematic block diagram showing the constitution of an analyzer, which is an example of a microchemical system, according to a first embodiment of the present invention.

In FIG. 9, the channel-possessing plate-shaped element 10 is placed on an X-Y sample stage 125. An exciting light source 111 outputs exciting light of a predetermined wavelength, and this exciting light is modulated by a chopper 112. The modulated exciting light is then reflected by a reflecting mirror 114, and then passes through a dichroic mirror 113, before being irradiated onto one of the solid cylindrical lenses 20 on the channel-possessing plate-shaped element 10. The irradiated exciting light is absorbed at the focal position thereof in the solution sample in the analysis channel 15 of the channel-possessing plate-shaped element 10, and hence a thermal lens is formed centered on the focal position. The portion of the exciting light irradiated on the solution sample not absorbed by the solution sample passes through the solution sample and then through the other solid cylindrical lens 20, and is then absorbed by a wavelength cut-off filter 116 so as not to fall upon a detector 117.

A detecting light source 120, on the other hand, outputs detecting light of a wavelength different to that of the exciting light. This detecting light is diverged slightly by a diverging lens 119, and is then reflected by the dichroic mirror 113, before falling upon the first solid cylindrical lens 20, whereupon the detecting light is convergently irradiated by the solid cylindrical lens 20 onto the solution sample in the analysis channel 15 of the channel-possessing plate-shaped element 10. The detecting light then passes through the thermal lens formed in the solution sample by the exciting light and is thus diverged or converged, before exiting from the second solid cylindrical lens 20. This detecting light that has been diverged or converged and exited is used as signal light. The signal light passes through the wavelength cut-off filter 116 and is detected by the detector 117.

The strength of the signal light detected by the detector 117 depends on the thermal lens formed in the sample, and moreover changes in synchronism with the exciting light modulation period of the chopper 112. The signal outputted from the detector 117 is amplified by a pre-amplifier 121, and is then demodulated in synchronism with the exciting light modulation period of the chopper 112 by a lock-in amplifier 122. The solution sample is analyzed by a computer 123 based on the output signal from the lock-in amplifier 122.

According to the microchemical system of the present embodiment, a microscope objective lens for converging light onto the channel-possessing plate-shaped element 10 and a condenser lens are not required, and moreover position adjustment in the Z-direction is not required.

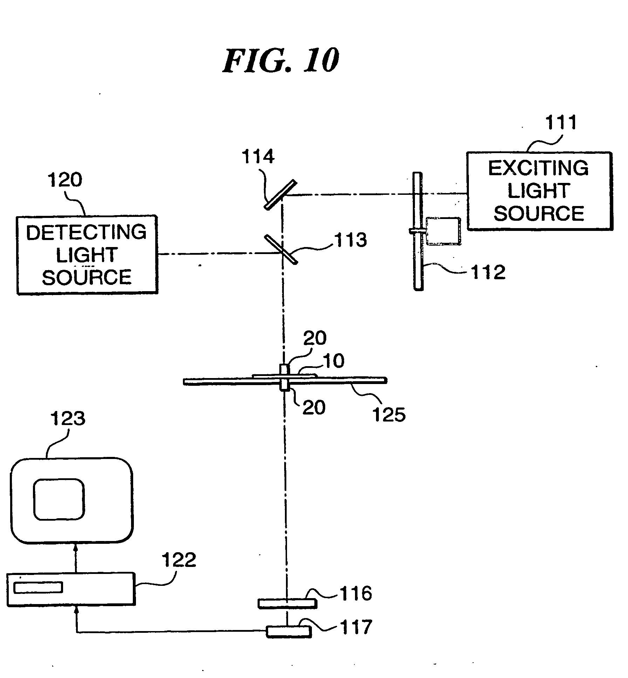

FIG. 10 is a schematic block diagram showing the constitution of an analyzer, which is an example of a microchemical system, according to a second embodiment of the present invention.

The analyzer according to the present embodiment has the same constitution as the analyzer according to the first embodiment except for the following differences: firstly, the solid cylindrical lens 20 on the light-inputting side is itself used to realize the optimum focal positions for the exciting light and the detecting light (by means of chromatic aberration), and hence a lens for diverging or converging the detecting light and thus shifting the focal position of the detecting light relative to the focal position of the exciting light is not provided; secondly, a pre-amplifier 121 is not used. In FIG. 10, component elements corresponding to those in FIG. 9 are represented by the same reference numerals as in FIG. 9. Note that if the signal is weak, then a pre-amplifier 121 may be provided.

In the analyzer of FIG. 10, because the solid cylindrical lens 20 on the light-inputting side has a chromatic aberration which realizes the optimum focal positions of the exciting light and the detecting light, a lens for diverging or converging the detecting light and thus shifting the focal position of the detecting light relative to the focal position of the exciting light is not required.

According to the microchemical system of the present embodiment, a large objective lens for a microscope for converging light onto the channel-possessing plate-shaped element 10 and a condenser lens are not required, and moreover a lens for diverging or converging the detecting light and thus shifting the focal position of the detecting light is not required. As a result, the microchemical system can be made yet smaller in size.

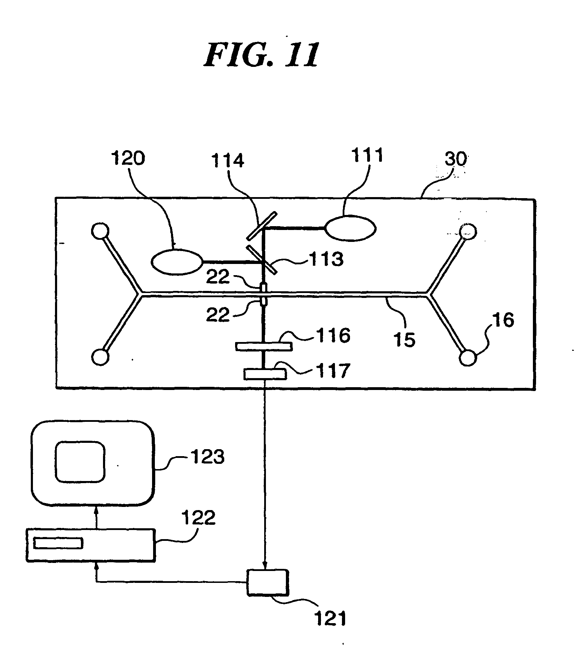

FIG. 11 is a schematic block diagram showing the constitution of a microchemical system according to a third embodiment of the present invention.

In FIG. 11, component elements corresponding to those in FIG. 10 are represented by the same reference numerals as in FIG. 10.

The microchemical system of the present embodiment differs from the microchemical systems of the previous embodiments in that main component elements are built into the channel-possessing plate-shaped element 30 of the chip element for microchemical systems, and also in that the exciting light source 111 itself is used as the modulating means and hence there is no chopper 112. The exciting light source 111, the detecting light source 120, the dichroic mirror 113, the reflecting mirror 114, the solid cylindrical lenses 22, the wavelength cut-off filter 116 and the detector 117 are thus all built into the channel-possessing plate-shaped element 30, and moreover optical paths for the exciting light from the exciting light source 111 and the detecting light from the detecting light source 120 are provided in the channel-possessing plate-shaped element 30. It should be noted that these component elements may alternatively be mounted on a surface or surfaces of the channel-possessing plate-shaped element 30.

According to the microchemical system of the present embodiment, various component elements are built into the channel-possessing plate-shaped element 30. As a result, the microchemical system can be made extremely small in size and very portable.

Industrial Applicability

As described above in detail, according to the present invention, adjustment between the focal position of the exciting light and the position of the solution sample (the sample in the liquid) does not have to be carried out every time a measurement is taken on the solution sample and thus work efficiency can be increased, and moreover a microchemical system that uses the chip element can be made smaller in size.

According to the present invention, the lens becomes extremely small in size, and hence the microchemical system can be made yet smaller in size.

According to the present invention, the microchemical system can be made yet smaller in size.

As a result, detecting light for detecting a thermal lens formed in the position of the solution sample can be easily led out, and moreover the microchemical system can be made smaller in size.

According to the present invention, the microchemical system can be made yet smaller in size.

According to the present invention, the microchemical system can be made smaller in size reliably.

According to the present invention, the microchemical system can be made yet smaller in size.

According to the present invention, because the microchemical system has a chip element for microchemical systems as described above, a microscope objective lens necessary in the conventional apparatuses becomes unnecessary, and hence the microchemical system can be made smaller in size. Moreover, by integrating the gradient refractive index lens and the channel-possessing plate-shaped element to form a single body, adjustment between an objective lens and the channel-possessing plate-shaped element every time a measurement is taken becomes unnecessary, and hence operation can be simplified and thus work efficiency can be increased.

According to the present invention, the microchemical system can be made extremely small in size, and thus excellent in terms of portability.

**Claims**

1. A chip element for use in a microchemical system that processes or carries out an operation on a sample in a liquid, comprising:

   a channel-possessing plate-shaped element (10) having a channel (15) through which the liquid containing the sample is passed; and
   a lens (20) fixed to said channel-possessing plate-shaped element in a position facing the channel.

2. A chip element as claimed in claim 1, wherein a focal position of said lens is within the channel.

3. A chip element as claimed in claim 1, further comprising a spacer via which said lens is fixed to said channel-possessing plate-shaped element.

4. A chip element as claimed in claim 1, wherein said lens is a gradient refractive index lens.

5. A chip element as claimed in claim 4, wherein the gradient refractive index lens is disposed on one surface of said channel-possessing plate-shaped element.

6. A chip element as claimed in claim 5, wherein the gradient refractive index lens is a solid cylindrical lens.

7. A chip element as claimed in claim 5, wherein the gradient refractive index lens is a planar lens.

8. A chip element as claimed in claim 5, further comprises a second gradient refractive lens fixed to another surface of said channel-possessing plate-shaped element in a position opposite the first-mentioned gradient refractive index lens with respect to the channel.

9. A chip element as claimed in claim 8, wherein the second gradient refractive index lens is a solid cylindrical lens.

**10.** A chip element as claimed in claim 8, wherein the second gradient refractive index lens is a planar lens.

**11.** A chip element as claimed in claim 4, wherein the gradient refractive index lens is built into said channel-possessing plate-shaped element.

**12.** A chip element as claimed in claim 11, wherein the gradient refractive index lens is a solid cylindrical lens.

**13.** A chip element as claimed in claim 11, further comprising a second gradient refractive index lens built into said channel-possessing plate-shaped element in a position opposite the first-mentioned gradient refractive index lens with respect to the channel.

**14.** A chip element as claimed in claim 13, wherein the second gradient refractive index lens is a solid cylindrical lens.

**15.** A chip element as claimed in any of claims 1 to 14, wherein said channel-possessing plate-shaped element is made of a glass.

**16.** A chip element as claimed in claim 15, wherein the microchemical system is an analyzer.

**17.** A microchemical system comprising:

a chip element for microchemical systems as claimed in any of claims 1 through 14;
an exciting light source that outputs exciting light of a predetermined wavelength;
a detecting light source that outputs detecting light of a wavelength different to the wavelength of the exciting light;
a light-inputting optical system that inputs the exciting light and the detecting light coaxially into the sample in the channel;
a light-outputting optical system that leads output light out from the sample; and
a detector that detects the output light coming from said light-outputting optical system.

**18.** A microchemical system as claimed in claim 17, wherein said channel-possessing plate-shaped element of said chip element for microchemical systems is made of a glass.

**19.** A microchemical system as claimed in claim 17, wherein said gradient refractive index lens has a chromatic aberration characteristic thereof adjusted such that shift in a focal position of the detecting light relative to a focal position of the exciting light has a predetermined optimum value.

**20.** A microchemical system as claimed in claim 17, wherein the microchemical system is an analyzer.

**21.** A microchemical system as claimed in claim 17, wherein said exciting light source, said detecting light source, said light-inputting optical system and said light-outputting optical system are built into said chip element.

**Patentansprüche**

**1.** Chip-Element zum Gebrauch in einem mikrochemischen System, welches eine Operation an einer Probe in einer Flüssigkeit vornimmt oder ausführt, umfassend:

ein kanalaufweisendes plattenförmiges Element (10) mit einem Kanal (15), durch den die die Probe enthaltende Flüssigkeit hindurchgeleitet wird; und
eine Linse (20), die an dem kanalaufweisenden plattenförmigen Element in einer dem Kanal gegenüberliegenden Position befestigt ist.

**2.** Chip-Element nach Anspruch 1, wobei sich eine Fokusposition der Linse innerhalb des Kanals befindet.

**3.** Chip-Element nach Anspruch 1, das weiterhin einen Abstandhalter aufweist, über den die Linse an dem kanalaufweisenden plattenförmigen Element befestigt ist.

**4.** Chip-Element nach Anspruch 1, wobei die Linse eine Gradientenbrechungsindexlinse ist.

**5.** Chip-Element nach Anspruch 4, wobei die Gradientenbrechungsindexlinse auf einer Fläche des kanalaufweisenden plattenförmigen Elements angeordnet ist.

**6.** Chip-Element nach Anspruch 5, wobei die Gradientenbrechungsindexlinse eine feste zylindrische Linse ist.

**7.** Chip-Element nach Anspruch 5, wobei die Gradientenbrechungsindexlinse eine flache Linse ist.

**8.** Chip-Element nach Anspruch 5, die weiterhin eine zweite Gradientenbrechungsindexlinse aufweist, die an einer weiteren Fläche des kanalaufweisenden plattenförmigen Elements in einer Position befestigt ist, die der erstgenannten Gradientenbrechungsindexlinse in Bezug auf den Kanal gegenüberliegt.

**9.** Chip-Element nach Anspruch 8, wobei die zweite Gradientenbrechungsindexlinse eine feste zylindrische Linse ist.

**10.** Chip-Element nach Anspruch 8, wobei die zweite Gradientenbrechungsindexlinse eine flache Linse ist.

**11.** Chip-Element nach Anspruch 4, wobei die Gradientenbrechungsindexlinse in das kanalaufweisende plattenförmige Element eingebaut ist.

**12.** Chip-Element nach Anspruch 11, wobei die Gradientenbrechungsindexlinse eine feste zylindrische Linse ist.

**13.** Chip-Element nach Anspruch 11, die weiterhin eine zweite Gradientenbrechungsindexlinse aufweist, die in das kanalaufweisende plattenförmige Element in einer Position eingebaut ist, die der erstgenannten Gradientenbrechungsindexlinse in Bezug auf den Kanal gegenüberliegt.

**14.** Chip-Element nach Anspruch 13, wobei die zweite Gradientenbrechungsindexlinse eine feste zylindrische Linse ist.

**15.** Chip-Element nach einem der Ansprüche 1 bis 14, wobei das kanalaufweisende plattenförmige Element aus einem Glas besteht.

**16.** Chip-Element nach Anspruch 15, wobei das mikrochemische System ein Analysator ist.

**17.** Mikrochemisches System, das aufweist:

ein Chip-Element für mikrochemische Systeme nach einem der Ansprüche 1 bis 14; eine anregende Lichtquelle, die anregendes Licht einer vorbestimmten Wellenlänge ausgibt;
eine Detektionslichtquelle, die Detektionslicht einer Wellenlänge ausgibt, die sich von der Wellenlänge des anregenden Lichts unterscheidet;
ein Licht eingebendes optisches System, das das anregende Licht und das Detektionslicht koaxial in die Probe in dem Kanal eingibt;
ein Licht ausgebendes optisches System, das Ausgabelicht aus der Probe herausführt; und
einen Detektor, der das Ausgabelicht detektiert, das von dem Licht ausgebenden optischen System kommt.

**18.** Mikrochemisches System nach Anspruch 17, wobei das kanalaufweisende plattenförmige Element des Chip-Elements für mikrochemische Systeme aus einem Glas besteht.

**19.** Mikrochemisches System nach Anspruch 17, wobei die Gradientenbrechungsindexlinse eine chromatische Aberrationscharakteristik aufweist, die derart angepasst ist, dass eine Verschiebung der Fokusposition des Detektionslichts relativ zur Fokusposition des anregenden Lichts einen vorbestimmten optimalen Wert aufweist.

**20.** Mikrochemisches System nach Anspruch 17, wobei das mikrochemische System ein Analysator ist.

**21.** Mikrochemisches System nach Anspruch 17, wobei die anregende Lichtquelle, die Detektionslichtquelle, das Licht eingebende optische System und das Licht ausgebende optische System in das Chip-Element eingebaut sind.

**Revendications**

1. Elément de puce destiné à être utilisé dans un système microchimique qui traite ou réalise une opération sur un échantillon dans un liquide, comprenant :

   un élément en forme de plaque possédant un canal (10) ayant un canal (15) à travers lequel le liquide contenant l'échantillon s'écoule ; et
   une lentille (20) fixée audit élément en forme de plaque possédant un canal dans une position faisant face au canal.

2. Elément de puce selon la revendication 1, dans lequel une position focale de ladite lentille se trouve dans le canal.

3. Elément de puce selon la revendication 1, comprenant en outre un espaceur par l'intermédiaire duquel ladite lentille est fixée audit élément en forme de plaque possédant un canal.

4. Elément de puce selon la revendication 1, dans lequel ladite lentille est une lentille à gradient d'indice de réfraction.

5. Elément de puce selon la revendication 4, dans lequel la lentille à gradient d'indice de réfraction est disposée sur une surface dudit élément en forme de plaque possédant un canal.

6. Elément de puce selon la revendication 5, dans lequel la lentille à gradient d'indice de réfraction est une lentille cylindrique solide.

7. Elément de puce selon la revendication 5, dans lequel la lentille à gradient d'indice de réfraction est une lentille plane.

8. Elément de puce selon la revendication 5, comprenant en outre une deuxième lentille à gradient d'indice de réfraction fixée sur une autre surface dudit élément en forme de plaque possédant un canal dans une position opposée à la première lentille à gradient d'indice de réfraction mentionnée par rapport au canal.

9. Elément de puce selon la revendication 8, dans lequel la deuxième lentille à gradient d'indice de réfraction est une lentille cylindrique solide.

10. Elément de puce selon la revendication 8, dans lequel la deuxième lentille à gradient d'indice de réfraction est une lentille plane.

11. Elément de puce selon la revendication 4, dans lequel la lentille à gradient d'indice de réfraction est construite dans ledit élément en forme de plaque possédant un canal.

12. Elément de puce selon la revendication 11, dans lequel la lentille à gradient d'indice de réfraction est une lentille cylindrique solide.

13. Elément de puce selon la revendication 11, comprenant en outre une deuxième lentille à gradient d'indice de réfraction construite dans ledit élément en forme de plaque possédant un canal dans une position opposée à la première lentille à gradient d'indice de réfraction mentionnée par rapport au canal.

14. Elément de puce selon la revendication 13, dans lequel la deuxième lentille à gradient d'indice de réfraction est une lentille cylindrique solide.

15. Elément de puce selon l'une quelconque des revendications 1 à 14, dans lequel ledit élément en forme de plaque possédant un canal est composé de verre.

16. Elément de puce selon la revendication 15, dans lequel le système microchimique est un analyseur.

17. Système microchimique comprenant :

   un élément de puce pour des systèmes microchimiques tel que revendiqué selon l'une quelconque des revendications 1 à 14 ;

une source de lumière d'excitation qui émet une lumière d'excitation d'une longueur d'onde prédéterminée ;

une source de lumière de détection qui émet la lumière de détection d'une longueur d'onde différente de la longueur d'onde de la lumière d'excitation ;

un système optique d'entrée de lumière qui entre la lumière d'excitation et la lumière de détection de façon coaxiale dans l'échantillon dans le canal ;

un système optique de sortie de lumière qui dirige la lumière émise hors de l'échantillon ; et

un détecteur qui détecte la lumière émise provenant dudit système optique de sortie de lumière.

**18.** Système microchimique selon la revendication 17, dans lequel ledit élément en forme de plaque possédant un canal dudit élément de puce pour systèmes microchimiques est composé d'un verre.

**19.** Système microchimique selon la revendication 17, dans lequel ladite lentille à gradient d'indice de réfraction présente une caractéristique d'aberration chromatique de celle-ci ajustée de sorte qu'un décalage d'une position focale de la lumière de détection par rapport à une position focale de la lumière d'excitation présente une valeur optimum prédéterminée.

**20.** Système microchimique selon la revendication 17, dans lequel le système microchimique est un analyseur.

**21.** Système microchimique selon la revendication 17, dans lequel ladite source de lumière d'excitation, ladite source de lumière de détection, ledit système optique d'entrée de lumière et ledit système optique de sortie de lumière sont intégrés dans ledit élément de puce.

## FIG. 1

## FIG. 2

## FIG. 3

## FIG. 4

# FIG. 5

# FIG. 6

## FIG. 7

## FIG. 8

# FIG. 9

# FIG. 10

# FIG. 11

# FIG. 12

# FIG. 13

OBJECTIVE LENS

THERMAL DIFFUSION

EXTREMELY SMALL SAMPLE

THERMAL LENS

DETECTING LIGHT

## FIG. 14A

## FIG. 14B

## FIG. 15A

## FIG. 15B

# FIG. 16